# EUROPÄISCHE PATENTANMELDUNG

(11) **EP 3 883 090 A1**
(43) Veröffentlichungstag der Anmeldung: **22.09.2021**
(21) Anmeldenummer: 20164225.3
(22) Anmeldetag: 19.03.2020
(51) Int. Cl.: H02K 1/16, H02K 3/12, H02K 3/34, H02K 3/48, H02K 3/50, H02K 15/04, H02K 15/06, H02K 1/18, H02K 7/18

(54) **VERFAHREN ZUM MONTIEREN VON FORMSPULEN ODER ZAHNSPULEN**

(71) Anmelder: Siemens Aktiengesellschaft, 80333 München (DE)
(72) Erfinder: Deutsch, Artur, 94086 Bad Griesbach i. Rottal (DE); Schönbauer, Norbert, 94072 Bad Füssing (DE); Weger, Michael, 94149 Kößlarn (DE)
(74) Vertreter: Michalski Hüttermann & Partner Patentanwälte mbB

(57) **Zusammenfassung**

Die Erfindung betrifft ein Verfahren zur Montage vorgefertigter Formspulen oder Zahnspulen (16) auf ein geschichtetes Blechpaket zur Bildung eines Stator-Segments (5) oder Stators durch folgende Schritte:
- Herstellen einer Formspule oder Zahnspulen (16) mit Isolation,
- Stanzen und Paketieren von Blechen zu voneinander durch Abstandshalter beabstandeten Teilblechpakten (12) und/oder Blechpaketen mithilfe von Druckplatten (1) mit Druckfingern (2) mit im Wesentlichen axial verlaufenden offenen Nuten (6),
- radiales Einsetzen der Formspulen oder Zahnspulen (16) in die Nuten (6), die einen oder mehrere Zähne (3) des Blechpakets umfassen, wobei zumindest an deren Stirnseiten des Blechpakets abnehmbare Hilfselemente (7) vorhanden sind, die die Isolation der Formspulen oder Zahnspulen (16) während des radialen Einsetzens schützen,
- radiales Abziehen der Hilfselemente (7) und neues positionieren der Hilfselemente (7) an weiteren Zähnen (3).

## Beschreibung

Die Erfindung betrifft ein Verfahren zum Montieren von Formspulen oder Zahnspulen in Nuten eines Blechpakets einer dynamoelektrischen Maschine und Hilfselemente zum Montieren dieser Spulen in ein Blechpaket.

Statoren bzw. Statorsegmente dynamoelektrischer Maschinen weisen in einem geschichteten Blechpaket Spulen auf, um durch elektromagnetische Wechselwirkung mit einem Rotor eine Arbeitsmaschine anzutreiben bzw. durch den angetriebenen Rotor elektrische Energie zu erzeugen.

Das Einbringen dieser Form- oder Zahnspulen ist, insbesondere bei dynamoelektrischen Maschinen großer Leistungsklasse (größer 1 MW), problematisch, da zum einen in einer Nut ein vergleichsweise hoher Kupferfüllfaktor vorhanden sein soll, des Weiteren eine Isolation um die Formspulen oder Zahnspulen vorgesehen werden muss. Das Einbringen der Spulen über den Nutschlitz ist dementsprechend aufwändig. Durch dieses Einbringen des Wicklungssystems, d.h. der Formspulen oder Zahnspulen in den Nuten können dabei Beschädigungen der Isolation der Formspulen oder Zahnspulen aufgrund des Kontakts mit den Kanten der Zähne des Blechpakets auftreten.

Bekannt ist eine Nutauskleidung als Gleithilfe und Schutz der Isolation einzusetzen. Diese Nutauskleidung kann aber nur unzureichend vor Beschädigungen der Isolation von Formspulen und Zahnspulen während des Einbringens in die Nut schützen.

Ausgehend davon liegt der Erfindung die Aufgabe zugrunde ein Verfahren für das Einbringen von Formspulen oder Zahnspulen in Nuten von Statoren oder Stator-Segmenten vorzusehen, die eine Beschädigung der Isolation von Formspulen oder Zahnspulen durch Zähne des Blechpakets während des Einbringens ausschließen.

Die Lösung der gestellten Aufgabe gelingt durch ein Verfahren zur Montage vorgefertigter Formspulen oder Zahnspulen auf ein geschichtetes Blechpaket zur Bildung eines Stator-Segments oder Stators durch folgende Schritte:
- Herstellen einer Formspule oder Zahnspulen mit Isolation,
- Stanzen und Paketieren von Blechen zu voneinander durch Abstandshalter beabstandeten Teilblechpakten und/oder Blechpaketen mithilfe von Druckplatten mit Druckfingern mit im Wesentlichen axial verlaufenden offenen Nuten,
- radiales Einsetzen der Formspulen oder Zahnspulen in die Nuten, die einen oder mehrere Zähne des Blechpakets umfassen, wobei zumindest an deren Stirnseiten des Blechpakets abnehmbare Hilfselemente vorhanden sind, die die Isolation der Formspulen oder Zahnspulen während des radialen Einsetzens schützen,
- radiales Abziehen der Hilfselemente und neues positionieren der Hilfselemente an weiteren Zähnen.

Die Lösung der gestellten Aufgabe gelingt ebenso durch ein Hilfselement zur Montageerleichterung von Form- oder Zahnspulen in Nuten eines Blechpakets, wobei das Hilfselement insbesondere eine gleichschenklige dreiecksähnliche Grundstruktur mit einander zugewandten gekrümmten Schenkeln aufweist.

Durch das erfindungsgemäße Verfahren wird nunmehr zumindest an den stirnseitigen Enden eines Blechpakets jeweils ein Hilfselement vorgesehen, das bei einer radialen Montage der Form- oder Zahnspulen in den Nuten des Blechpakets eine Führung dieser Spulen in die Nut des Blechpakets gewährleistet. Damit werden insbesondere Beschädigungen der Isolation durch die Kanten der Zähne vermieden.

Die Form- oder Zahnspulen sind offene oder geschlossene Spulen, die einem massiven isolierten Leiter oder einzelnen gegeneinander isolierten Teilleiter aufweisen. Diese gegeneinander isolierten Teilleiter sind in der Regel von einer Hauptisolierung umgeben. Die Hauptisolierung ist insbesondere im vorgesehenen Nutbereich einer dynamoelektrischen Maschine vorhanden.

Falls das Blechpaket durch Druckplatten mit Druckfingern an den Stirnseiten versehen ist, werden die Hilfselemente vorzugsweise an den Druckfingern platziert, so dass auch auf diese Art und Weise ein Kontakt mit den scharfen Kanten der Zähne im Bereich der Stirnseiten des Blechpakets mit der Isolation der Form- und Zahnspulen vermieden wird. Die Breite der Druckfinger ist geringer als die Breite der Zähne, so dass die Hilfselemente eine Führung der Spulen gewährleisten können, ohne die Breite der Nut während der Montage zu verringern.

Ein derartiges Blechpaket kann in Axialrichtung betrachtet auch aus Teilblechpaketen aufgebaut sein, die jeweils durch Abstandshalter voneinander getrennt sind.

Um nunmehr auf jeden Fall einen Kontakt der Isolation der Form oder Zahnspulen mit den scharfkantigen Zähnen des Blechpakets oder Teilblechpakets zu vermeiden, sind derartige Hilfselemente nicht nur an den Stirnseiten anzuordnen, sondern ebenso beispielsweise an den Abstandshaltern zwischen den Teilblechpaketen. Dies reduziert den Kontakt mit der Isolation und den scharfkantigen Zähnen.

Erfindungsgemäß ist das Hilfselement in Form eines Dreiecks ausgeführt, wobei die beiden Schenkel eines gleichzeitig geformten Dreiecks einen Knick aufweisen. Dieser Knick gewährleistet die Führung der Form oder Zahnspulen im Bereich des Zahnes während der Montage. Die Schenkel des Dreiecks können dabei auch gekrümmt ausgeführt werden.

Um eine Fixierung des Hilfselements zu erhalten, sind die beiden Schenkel dieses gleichschenkligen Dreiecks über die Hypotenuse dieses Dreiecks verlängert, sodass über diese verlängerten Schenkel eine Fixierung an Druckfingern, an den Blechen oder an den Abstandshalter erfolgen kann. Diese Fixierung kann durch Schnappelemente an den verlängerten Schenkeln verbessert werden.

Es sind ebenso andere Formen von Hilfselementen möglich, die ein schadloses Montieren von Spulen in Nuten eines Blechpakets gewährleisten.

Die Erfindung sowie weitere vorteilhafte Ausgestaltungen der Erfindung wurden anhand prinzipiell dargestellte Ausführungsbeispiele näher erläutert; darin zeigen:
- FIG 1: Eine perspektivische Darstellung eines Stator-Segments,
- FIG 2: ein Teil-Blechpaket,
- FIG 3: ein Hilfselement auf einem Zahn,
- FIG 4: einen prinzipiellen Montagevorgang,
- FIG 5: platzieren einer Zahnspulen in Nuten eines Blechpakets,
- FIG 6: eine prinzipiell dargestellte Windkraftanlage.

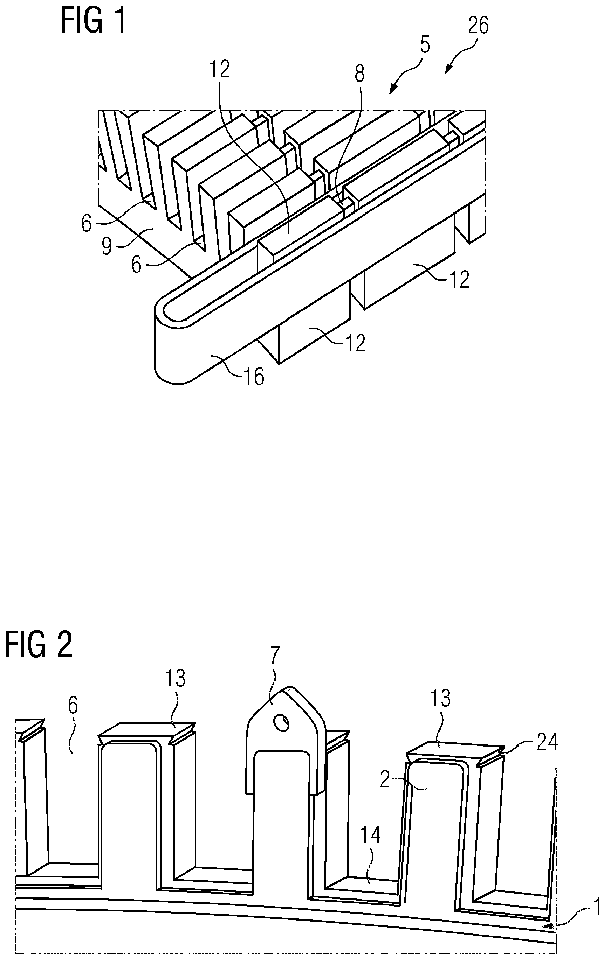

FIG 1 zeigt in einer perspektivischen Darstellung ein Statorsegment 5, mit einer Zahnspulen 16 in einer Nut 6. Das Blechpaket 26 ist in Teilblechpaketen 12 unterteilt, die mittels Abstandshalter 8 voneinander beabstandet sind.

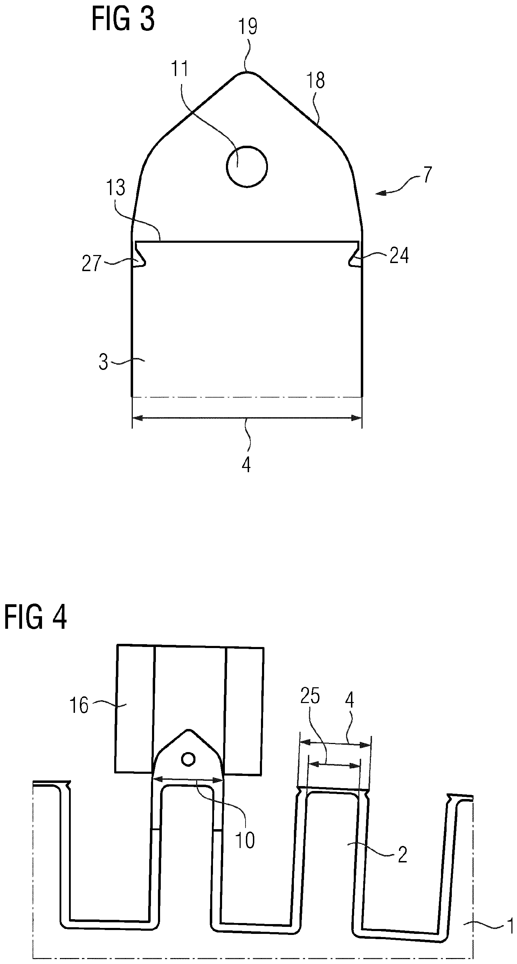

FIG 2 zeigt ein Teilblechpaket 12 an einem axialen Ende des Blechpakets 26, wobei das Teilblechpaket 12 eine Druckplatte 1 mit Druckfingern 2 aufweist, die der Kompaktierung des Blechpakets 26 dienen. Auf einem Druckfingern 2 ist dabei ein Hilfselement 7 angeordnet, das in FIG 3 näher ausgeführt ist.

Das Hilfselement 7 weist eine prinzipielle dreieckige Grundform auf. Wobei das Dreieck zwei gleiche Schenkelseiten 15 aufweist, die im oberen Teil jeweils einen Knick 18 aufweisen. Dieser Knick 18 erleichtert die Führung einer Formspule oder einer Zahnspulen 16 auf den Zahn 3 bzw. in die Nut 6. Das Hilfselement 7 sollte insbesondere oberhalb des Knicks 18 eine gute Gleitfähigkeit aufweisen, um ein Verkanten der Spule während des Montagevorgangs zu vermeiden. Das Hilfselement 7 ist aus gleitfähigem Material, wie Glashartgewebe oder PTFE oder einem anderen harten Kunststoff. Es kann auch aus einem Metall, insbesondere Stahl sein.

Optional kann dabei im oberen Teil der Schenkelseiten 15 ein Überzug, z.B. eine Gleitfolie vorgesehen werden, der die Gleitfähigkeit weiter verbessert. Dieser Überzug kann bei Abnutzung ersetzt werden.

Schnappelemente 27 können dabei die zeitweise Fixierung der Hilfselemente 7 am Zahn 3 oder am Druckfinger 2 verbessern.

Die Zahnbreite 4, insbesondere im Bereich des Zahnkopfes 13 ist dabei gleich oder geringfügig kleiner (ca. 0 bis 3 mm je nach Dimension der Anordnung) als die Breite 10 des Hilfselements 7 in diesem Bereich. Damit wird nun während der Montage auf jeden Fall einen Kontakt der Isolation mit den Kanten des Zahnkopfes 13 vermieden.

In anderen Worten die Breite 10 des Hilfselements 7 ist also gleich der Zahnbreite 4 oder geringfügig größer. Um nach der Montage das Hilfselement 7 besser abziehen zu können ist eine Öse 11 im oberen Bereich des Hilfselement 7 vorgesehen.

FIG 4 zeigt einen prinzipiellen Montagevorgang, bei dem eine Zahnspule 16 in die Nuten 6 gesetzt wird. Ein Hilfselement 7 mit einer Breite 10 ist am Druckfingern 2 positioniert und verhindert somit einen Kontakt der Isolation der Spule 16 mit den Kanten des Blechpakets 26 oder Teilblechpakets 12.

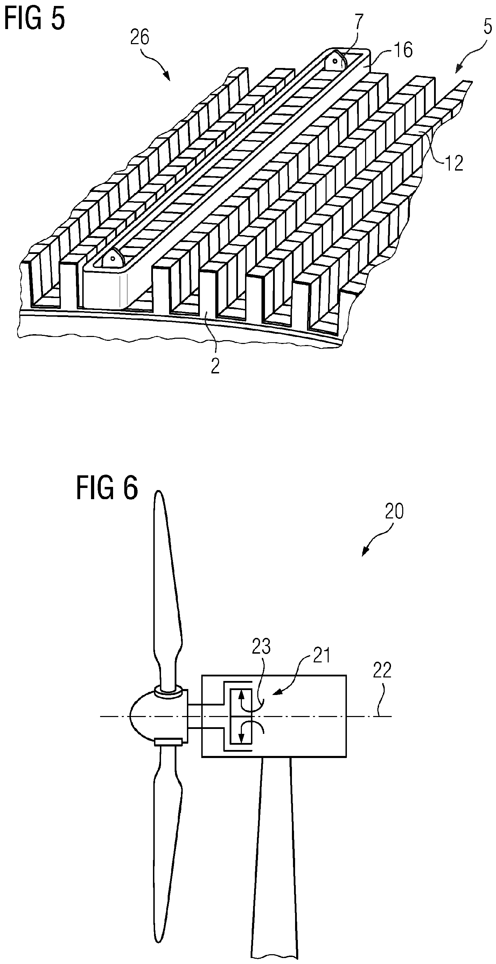

Nach vollendeter Montage der einen Zahnspule 16 wird gemäß FIG 5 nunmehr das Hilfselement 7 mithilfe einer Ausnehmung 11, insbesondere einer Öse abgezogen und auf den benachbarten oder einen anderen Druckfingern 2 gesetzt und damit die Prozedur des radialen Einbringens der Spulen 16 zu wiederholen.

Pro Spule sind als mindestens zwei Hilfselemente 7 notwendig, die für den Montagevorgang jeweils an einer Stirnseite des Blechpakets 26 angeordnet werden.

Damit wird nunmehr ein Stator bzw. ein Statorsegment 5 oder Statorsegmente 5 für einen Generator 21 einer Windkraftanlage 20 gemäß FIG 6 mit einer Luftkühlung bereitgestellt, dabei wird Kühlluft 23 über Spalte zwischen den Teilblechpaketen 12 des Blechpakets 26 zur Kühlung des Stators geführt.

## Patentansprüche

1. Verfahren zur Montage vorgefertigter Formspulen oder Zahnspulen (16) auf ein geschichtetes Blechpaket zur Bildung eines Stator-Segments (5) oder Stators durch folgende Schritte:
- Herstellen einer Formspule oder Zahnspulen (16) mit Isolation,
- Stanzen und Paketieren von Blechen zu voneinander durch Abstandshalter beabstandeten Teilblechpakten (12) und/oder Blechpaketen mithilfe von Druckplatten (1) mit Druckfingern (2) mit im Wesentlichen axial verlaufenden offenen Nuten (6),
- radiales Einsetzen der Formspulen oder Zahnspulen (16) in die Nuten (6), die einen oder mehrere Zähne (3) des Blechpakets umfassen, wobei zumindest an deren Stirnseiten des Blechpakets abnehmbare Hilfselemente (7) vorhanden sind, die die Isolation der Formspulen oder Zahnspulen (16) während des radialen Einsetzens schützen,
- radiales Abziehen der Hilfselemente (7) und neues positionieren der Hilfselemente (7) an weiteren Zähnen (3).

2. Verfahren zur Montage nach Anspruch 1, **dadurch gekennzeichnet, dass** die Hilfselemente (7) auf den ersten bzw. letzten Blechen des Blechpakets (26) angeordnet werden.

3. Verfahren zur Montage nach Anspruch 1, **dadurch gekennzeichnet, dass** die Hilfselemente (7) auf den Druckfingern (2) positioniert werden.

4. Verfahren zur Montage nach einem der vorhergehenden Ansprüche, **dadurch gekennzeichnet, dass** die Hilfselemente (7) ergänzend auf den Abstandshaltern (8) zwischen den Teilblechpaketen (12) des Blechpaketes (26) angeordnet werden.

5. Hilfselement (7) zur Montageerleichterung von Form- oder Zahnspulen (16) in Nuten (6) eines Blechpakets (26), wobei das Hilfselement (7) insbesondere eine gleichschenklige dreiecksähnliche Grundstruktur mit einander zugewandten gekrümmten Schenkeln (15) aufweist.

6. Hilfselement (7) nach Anspruch 5, **dadurch gekennzeichnet, dass** das Hilfselement (7) im oberen Teil eine Öse und/oder an den Verlängerungen (17) der Schenkeln (15) lösbare Schnappelemente (27) aufweist.
